# EUROPEAN PATENT APPLICATION

(11) **EP 0 729 008 A1**
(43) Date of publication of application: **28.08.1996**
(21) Application number: 95301182.2
(22) Date of filing: 23.02.1995
(51) Int. Cl.: G01B 17/00, G01B 13/12

(54) **Application and method for detecting changes in distance**

(71) Applicant: UNIVERSITY OF EAST LONDON, Dagenham, Essex (GB)
(72) Inventor: Weerasinghe, Vijitha Maithri, London SE18 3BY (GB)
(74) Representative: Matthews, Graham Farrah

(57) **Abstract**

Changes in distance (x) between a gas nozzle (15) and an object surface (16) are detected. Signals emanating from the gas jet are considered at discrete positions of resonance, where the signal amplitude becomes high and the signal frequency spectrum becomes narrow and specific.

## Description

The present invention relates to detecting changes in distance. In particular, the present invention relates to detecting changes in distance between an object surface and a gas nozzle positioned opposite said surface.

Numerous systems are known for detecting the position of a surface from a particular datum. For example, systems are regularly employed in machine tool environments, in which it is necessary to accurately measure the distance of an object surface from an operating machine tool.

The problem with many known systems is that, although they are highly reliable in controlled conditions, they are susceptible to degradation in actual working conditions, where operators may have less control over such conditions as operating temperature, vibration, humidity and the presence of cooling lubricants, etc.

According to the present invention, there is provided a method of detecting changes in distance between a gas nozzle and an object surface using acoustic signals emanating from the gas jet at a selected discrete position of resonance when the reflected feedback perturbations from the object surface become favourable in phase with the inherent perturbations of the gas jet. The resonant frequency used may be selected from a number of resonant frequencies including the maximum resonant frequency, preferably the resonant frequency where high sensitivity is obtained prior to or just after resonance as the distance between nozzle and surface varies.

Signal intensity may be further enhanced if the gas jet resonances are arranged to coincide with any mechanical resonance of the nozzle.

The use of gas jets in manufacturing processes is well known. For example, a gas jet is identified in British Patent Publication 1,385,792, in which jets of air are used to determine whether cigarette rods are completely filled with tobacco. However, such tests merely provide a simple indication, based on the extent to which the jet is deflected. In the present invention a resonance is established such that small deviations from the position at which resonance occurs can be detected in terms of the acoustic signal amplitude and frequency.

In a preferred embodiment, signals are detected using an acoustic transducer, preferably a piezo-electric type transducer. Preferably, the transducer is placed on the nozzle surface.

According to a second aspect of the present invention, there is provided apparatus for detecting changes in distance between a gas nozzle and an object surface using signals emanating from a gas jet at a selected discrete position of resonance when the reflected feedback perturbations from the object surface become favourably in phase with the inherent perturbations of the gas jet.

Furthermore, any mechanical resonance of the nozzle may be arranged to coincide with the selected discrete resonance.

East German Patent No. 201502 relates to an acoustic proximity sensor. A gas nozzle contained within a parabolic enclosure produces acoustic signals which are directed towards the workpiece. The acoustic signals are then received by a receiving transducer and it is possible to estimate the distance of the probe from the workpiece based on the attenuation of the signal amplitude received by the transducer. The device disclosed in the East German patent is analogous to known systems using light, in which signals are generated from a source, reflected from the workpiece and received at a receiver.

The disadvantage in the arrangement of the East German patent is that the required level of accuracy could not be achieved.

The invention will now be described by way of example only, with reference to the accompanying drawings, in which:
Figure 1 shows a gas nozzle directing gas towards a surface of an object with the acoustic transducer placed on the nozzle surface;
Figure 2a illustrates the characteristic of the output signal as the distance between the gas nozzle and the object increases;
Figure 2b illustrates acoustic signal amplitude peaks at various resonant positions as the distance between the gas nozzle and the object increases;
Figure 3a illustrates a frequency spectrum of an acoustic signal produced when the nozzle illustrated in Figure 1 is at a position of non-resonance with constant gas pressure;
Figure 3b illustrates a frequency spectrum of an acoustic signal produced when the nozzle identified in Figure 1 is at a position of resonance with the gas pressure constant;
Figure 4 illustrates the detection of a machined ten micron step on a flat surface from a stand off distance of 2 mm, wherein the signal shown is the r.m.s. value of the acoustic signal at a position of resonance;
Figure 5 illustrates an example of the application of the invention for measurement of a surface grinding operation on a workpiece; and
Figures 6a and 6b show signal r.m.s. amplitude characteristics of the arrangement of Figure 5.

The inventors have observed a phenomenon which is that when a high pressure gas jet interacts with an object placed in its path ultrasonic signals in the 100-800 kHz frequency range are produced.

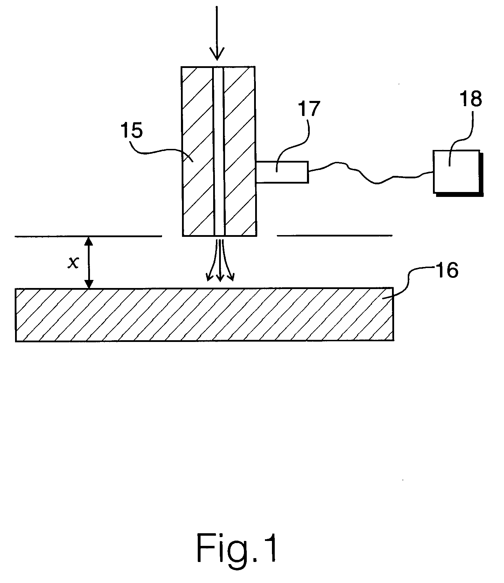

An embodiment of the present invention is shown in Figure 1 in which a probe 15 is provided having a smooth bore 15a of a diameter of 0.12-0.25 mm. A piezo-electric (acoustic) transducer 17, operating in the range of 100 kHz-1MHz, is mounted on the exterior surface of the probe and is outputted to a signal processor 18. Air is supplied at a pressure in the range of 34.475 to 689.5 kPa (15-100 psi), preferably 137.9 kPa (20 psi), and is directed orthogonally towards the surface of a workpiece 16 spaced at a selected distance X.

In operation, the air jet forms an acoustic resonator between the nozzle of the probe and the object surface, acoustic waves being generated within the space defined between the gas nozzle and the workpiece surface. Inherent perturbations in the free gas jets are enhanced by feedback perturbations from the reflector (the object surface) at discrete positions of resonance where the two perturbations are favourably in phase. Furthermore, at these discrete positions there may also be coincident mechanical resonances of the nozzle.

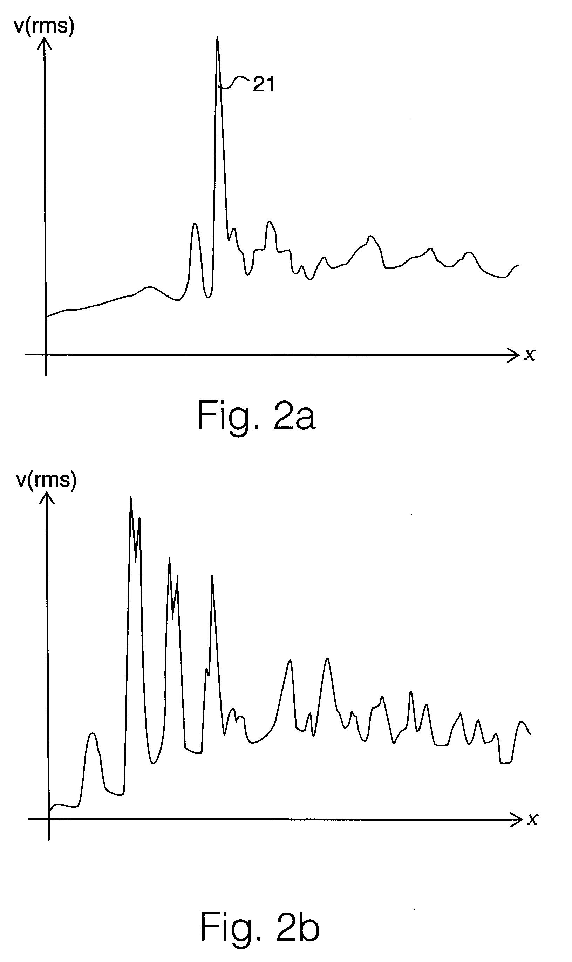

At certain discrete values of X, the signal amplitude 21 increases, as shown in Figure 2. Furthermore, at these discrete values of X, referred to as positions of resonance, the frequency spectrum of the acoustic signal becomes narrow and specific for a particular X value.

Accordingly, in the region of resonance 21 (Figure 2a) the signal becomes very sensitive to small changes in the distance X whereby the apparatus can detect small changes in the acoustic signal representing small changes of distance in the region of 1 micron with the probe spaced from the surface of the workpiece at about 2 mm. Typically, a 5 micrometre adjustment may result in a change of frequency of about 5 kHz around a resonant frequency of 600 kHz.

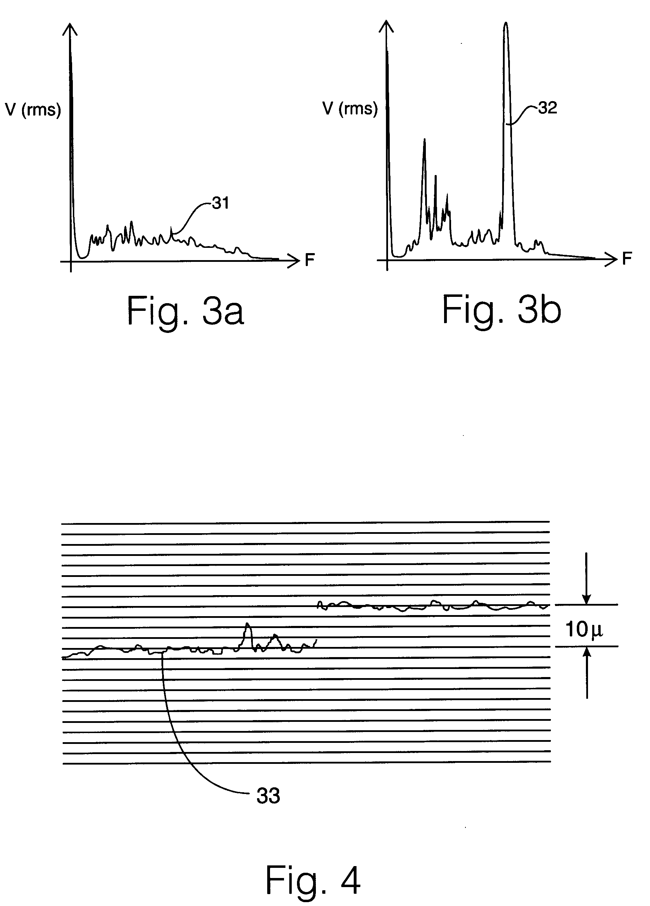

Preferably, the apparatus is calibrated so that an optimum constant resonant frequency 32 (Figure 3b) of about 600 kHz (Figure 3b) is selected to give a characteristic signal from the transducer, the sensitivity of the apparatus being optimised accordingly. Deviation from the reference spacing (X) affects the amplitude and signal stability. As movements away from the point of resonance are made the stability of acoustic signals deteriorates, with various frequencies being generated as bursts and time intervals existing between these bursts.

Grinding is performed on workpieces for the following reasons:
(1) After surface hardening the workpiece is too hard to be milled or turned etc.
(2) High accuracy is required.
(3) A smooth surface finish is required.

In conventional cylindrical grinding, in which a cylindrical workpiece is rotated about centres, it is possible for a contact probe to monitor continuously the size of the workpiece and thereby establish a feedback loop. Arrangements of this type are not possible with surface grinding, due to the intermittent nature of the grinding operation. Surface probes would repeatedly be taken on and off the workpiece, the resulting vibration being such that it would not be possible to effect measurements of the required resolution.

In conventional surface grinding, the grinding machine is set up to effect grinding to a predetermined level. Over time, the grinding wheel itself will degrade and it will be necessary to reset the machine. Thus, finished workpieces are examined intermittently and modifications are made to the machine once acceptable tolerances have been exceeded. The present invention accommodates the wear of the grinding wheel.

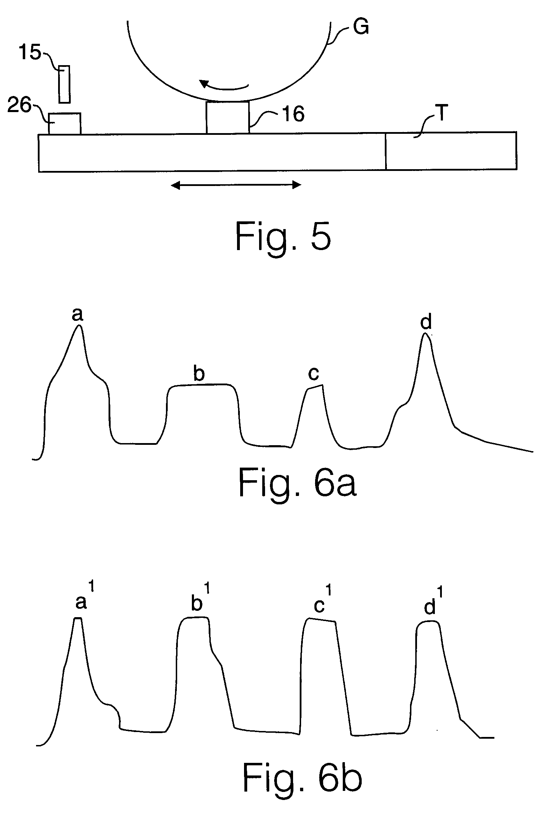

In Figure 5 there is shown a probe 15 mounted in a normally fixed, though adjustable, position above a traversable worktable T supporting a workpiece 16. The probe is mounted independently of the grinding machine. In operation the workpiece is passed beneath the grinding wheel G and is reciprocated between the grinding position and the probe. For calibration and monitoring of the grinding operation a slip gauge 26 is provided on the worktable and is moved to a position beneath the probe at an end position of the table.

The slip gauge (or other specially made gauge block) is selected according to the desired target size required of the workpiece. Thus, the grinding operation may be performed on a workpiece required to have a size of 25mm with a tolerance of 0.02mm. The gauge having a finer tolerance than 0.02mm, is provided to specify the required size of 25mm above the bed.

To initiate the process, the probe is located at a resonant position above the slip gauge and the characteristics of resonance are recorded, amplitude in the simple embodiment but also frequency, burst event and stability in the more complex embodiment. These characteristics define the signature of the resonance.

The machine is started and the coolant is activated. At this stage the signature is re-examined and, if required, signal noise may be eliminated. In practice, it has been found that very little noise is introduced, essentially due to the high working frequency of the acoustic wave.

Grinding is commenced which results in a first cut being taken off the workpiece. The table moves, resulting in the probe being directed above the workpiece. Thus, in this way, the probe is used as a trigger probe to determine whether the workpiece has been ground down to the size of the gauge.

On the return reciprocation, the probe is again placed above the gauge, allowing the signature to be compared, thereby ensuring that the arrangement is stable and that grinding may continue. Thus, the arrangement has provided a non-contact trigger probe which may be included within a feedback loop.

Figure 6 shows the frequency characteristic before machining and Figure 6b shows the characteristic after machining. References a,a' and d,d' indicate the signal r.m.s. amplitude with the probe over the gauge and b,b' and c,c' indicate the signal amplitude on the workpiece.

Care must be taken to ensure that the grinding process does not go beyond the desired level, given that the system would not then be able to tell that an overshoot condition has been created.

It is proposed that a reference value may be set in the machine and a comparison made to indicate that the resonant position is approaching. As this occurs, the depth of cut may be reduced, such that the depth becomes smaller and smaller as a resonant point approaches.

In a further modification of the invention, information in the signal just prior to resonance is analysed and used to control the depth of cut; thereby a larger cut is taken to begin with and is then reduced proportionally as resonance is approached. Not only does this prevent overshoot, but it also reduces thermal distortion as the target size approaches.

The invention effectively provides an inertia-less probe which may be used also in cylindrical grinding operations. A contact probe would hit the workpiece and would need to settle. A calliper can be used for cylindrical grinding but it is not possible to use such a device for surface grinding. Thus, up to now, it has been necessary to check machine components intermittently.

Although the equipment will work automatically without tolerances of workpieces needing to be measured so often, it will still be necessary to dress the wheel given that unsatisfactory grinding will occur if the wheel is loaded or if it has worn. It is proposed to provide another acoustic probe directed towards the wheel itself, such that an output signal will be generated once the wheel has reached an unsatisfactory condition to stop the machine.

Various modifications may be provided viz:-
The acoustic transducer may be mounted on the workpiece;
The transducer may be formed integrally with the gas nozzle; more particularly the bore may be placed on a crystal of the transducer;
The nozzle may be formed with a plurality of orifices;
A plurality of transducers may be provided;
The nozzle may be mounted so as to rotate to provide intermittent application of the flow of air onto the workpiece.

Optical systems are known in which accurate measurements can be made derived from the amplitude of light signals reflected back from a workpiece. Such an approach is very accurate in theory, however, in practice, it is very difficult to use optical techniques when cooling fluid is also being employed, therefore such techniques are not generally practical. Thus, the acoustic probe of the invention is advantageous in a grinding environment because it is simple to construct, robust and can cope with hostile environments, including swarf and cooling fluid. Furthermore, an important aspect is that, unlike in pneumatic back pressure sensing devices, the acoustic signal is relatively insensitive to the temperature of the workpiece because of the larger stand-off distance. The probe acts as a trigger probe and may be arranged to produce a signal when it is at a precise distance from the workpiece, such that acoustic wave is reflected back, thereafter the machine automatically stops.

The invention is particularly applicable as a non-contact trigger probe, for use in automatic inspection of component dimensions. In addition, the invention may also be applied in situations where it is desirable to locate a datum surface for various machining operations. The device may also be applied in situations where it is desired to measure surface roughness, roundness, the detection of surface cracks in ceramics, the detection of coating delamination, the detection of the position of a weld butt. Furthermore, the device may also be used as a constant height follower in laser cutting operations.

## Claims

1. A method of detecting changes in distance between a gas nozzle and an object surface using acoustic signals emanating from the gas jet at a selected discrete position of resonance when the reflected feedback perturbations from the object surface become favourably in phase with the inherent perturbations of the gas jet.

2. A method as claimed in claim 1, characterised in that the gas jet resonance coincides with a mechanical resonance of the nozzle.

3. A method as claimed in claim 1 or 2, characterised in that said signals are detected using an acoustic transducer placed close to or on the nozzle surface.

4. A method as claimed in claim 3, characterised in that the gas jet resonance coincides with the resonance characteristics of the acoustic transducer.

5. A method as claimed in claim 2, characterised in that the resonance characteristics of the transducer are matched to the gas jet resonance and mechanical resonance of the nozzle.

6. A method as claimed in claim 4 or 5, characterised in that said acoustic transducer is a piezo-electric type transducer.

7. A method as claimed in any one of claims 2 to 6, characterised in that the acoustic transducer is placed on the object surface.

8. A method as claimed in claim 6 or 7, characterised in that said acoustic transducer is an integral part of the gas nozzle.

9. A method as claimed in claim 6, characterised in that the gas orifice is placed on a crystal of the transducer.

10. A method as claimed in any one of claims 1 to 9, characterised in that the gas nozzle has multiple orifices.

11. A method as claimed in claim 5, 6 or 7, characterised in that a plurality of acoustic transducers are provided.

12. A method as claimed in any of claims 1 to 11, characterised in that the gas nozzle is arranged to rotate.

13. A method as claimed in any one of claims 1 to 12 for use in machining a workpiece, characterised in that there are included the steps of:
placing a standard at a position offset from said workpiece,
moving said nozzle opposite the surface of said standard,
effecting calibration of the apparatus by adjustment of the nozzle with respect to the surface of the standard to produce a reference signal at a selected resonant frequency,
directing the gas nozzle toward the surface of the workpiece after machining said workpiece to produce a measured signal, and
stopping said machining when the nozzle has detected the target position when resonance is achieved at said workpiece by comparison of said measured signal with said reference signal.

14. A method as claimed in any one of claims 1 to 12 for use in a grinding operation, characterised in that there are included the steps of:
placing the workpiece on the table,
placing a standard on said table at a position offset from said workpiece,
moving the table so as to position said standard beneath said nozzle,
effecting calibration of the apparatus by adjustment of the nozzle with respect to the surface of the standard to produce a reference signal at a selected resonant frequency,
moving the table so that the workpiece is positioned beneath said nozzle and outputting the measured signal from the transducer,
effecting reciprocation of the table to effect step-by-step grinding,
determining the signal from the workpiece after each stroke or after a selected number of strokes of the grinding wheel, and
stopping the reciprocation as soon as the nozzle has detected the target position when resonance is achieved over said workpiece by comparison of said measured signal with said reference signal.

15. A method as claimed in claim 14, characterised in that the output signal from the transducer with the nozzle positioned over the workpiece is compared with the reference signal achieved during calibration, the grinding operation being stopped when the comparison indicates that the target dimension has been reached within prescribed tolerances.

16. A method as claimed in claim 14 or 15, characterised in that the depth of cut is reduced at a predetermined position before resonance is reached.

17. A method as claimed in claim 14 or 15, characterised in that the depth of cut is progressively reduced, using information in the signal before resonance is reached.

18. Apparatus for detecting changes in distance between a gas nozzle (15) and an object surface (16), and characterised by processing means (signal processing unit) for processing signals emanating from the gas jet at discrete positions of resonance when the reflected feedback perturbations from the object surface become favourably in phase with the inherent perturbations of the gas jet.

19. Apparatus as claimed in claim 18, characterised in that the gas jet resonance coincides with a mechanical resonance of the nozzle.

20. Apparatus as claimed in claim 19, characterised in that there is provided an acoustic transducer placed close to or on the nozzle surface.

21. Apparatus as claimed in claim 20, characterised in that the gas jet resonance coincides with the resonance characteristics of the acoustic transducer.

22. Apparatus as claimed in claim 20, characterised in that the resonance characteristics of the transducer are adapted to match the gas jet resonance and mechanical resonance of the nozzle.

23. Apparatus as claimed in any one of claims 20 to 22, characterised in that said transducer is a piezo-electric type transducer.

24. Apparatus as claimed in any one of claims 20 to claim 22, characterised in that there is provided an acoustic transducer placed on the object surface.

25. Apparatus as claimed in claim 24, characterised in that said acoustic transducer is an integral part of the gas nozzle.

26. Apparatus as claimed in claim 23, characterised in that the gas orifice is placed on the crystal of the transducer.

27. Apparatus as claimed in any one of claims 18 to 26, characterised in that said gas nozzle has multiple orifices.

28. Apparatus as claimed in any one of claims 20 to 27, including multiple transducers.

29. Apparatus as claimed in any one of claims 18 to 28, characterised in that the gas nozzle is rotatably mounted.

30. Apparatus as claimed in any one of claims 18 to 29, for use in machining a workpiece, characterised in that said processing means (signal processing unit) includes a comparator for comparing the signal obtained from the surface of the workpiece with a signal obtained from a standard surface of known dimension, said comparator generating a control signal for ending the machining operation as the target dimension is reached.

31. Apparatus as claimed in claim 30, characterised in that said processing means is adapted to reduce or progressively reduce the depth of cut as the target dimension is approached.

32. Apparatus as claimed in claim 30 or 31, characterised in that an additional gas nozzle is provided which is directed towards the grinding wheel to detect the wear and/or condition thereof.
